# EUROPÄISCHE PATENTANMELDUNG

(11) **EP 0 547 511 A1**
(43) Veröffentlichungstag der Anmeldung: **23.06.1993**
(21) Anmeldenummer: 92121091.0
(22) Anmeldetag: 10.12.1992
(51) Int. Cl.: B01J 35/04, B01J 35/06, B01D 53/36

(54) **Katalysatoranordnung für weitgehend staubfreie Gase**

(30) Priorität: 16.12.1991 DE 4141513
(71) Anmelder: SIEMENS AKTIENGESELLSCHAFT, D-80333 München (DE)
(72) Erfinder: Sprehe, Josef, Dipl.-Ing., W-8510 Fürth-Vach (DE); Herzig, Sabine, W-8500 Nürnberg (DE); Brückner, Uwe, Dipl.-Ing., W-8503 Altdorf (DE)

(57) **Zusammenfassung**

Für den Einbau von Katalysatoranordnungen in bereits bestehenden Anlagen spielt der Raumbedarf eine bedeutsame Rolle. Zugleich sollte der zusätzliche Strömungswiderstand nach Möglichkeit von den bestehenden Anlagenkomponenten ohne Nach- und Umbau verkraftet werden können. Zugleich sollte auch der Schlupf von Stickoxiden und Reaktionspartnern so gering wie möglich gehalten werden.

Hierzu sieht die Erfindung vor, daß bei parallel zueinander und zum Gasstrom ausgerichteten Katalysatorplatten jede Katalysatorplatte eine beidseitig mit einer katalytisch aktiven Masse beschichtete metallische Tragstruktur (2) enthält, die metallische Tragstruktur eine Stärke (4) kleiner als 0,7 mm hat, die Schichtdicke der aufgetragenen katalytischen Masse (6) kleiner als 0,8 mm ist, der gegenseitige Plattenabstand kleiner als 3 mm ist und die Platten parallel zu Strömungsrichtung ausgerichtete Wellen bzw. Sicken besitzen.

Die Erfindung ist bei fossilen Verbrennungsanlagen im Reingasbereich anwendbar.

## Beschreibung

Die Erfindung bezieht sich auf eine Katalysatoranordnung für weitgehend staubfreie Gase, insbesondere zur Minderung der Stickoxide in Verbrennungsabgasen in Gegenwart eines Reduktionsmittels, und ein Verfahren zu seiner Herstellung.

Durch die deutsche Auslegeschrift 1 476 507 ist es bereits bekannt, die Auspuffgase von Brennkraftmaschinen katalytisch zu reinigen. Hierzu wird ein katalytisch beschichteter Katalysatorkörper, bestehend aus einem porösen, katalytisch inerten zusammenhängenden feuerfesten Gerippe aus Zirkonmolyd, als Träger verwandt. Mit einem solchen keramischen Träger für die katalytisch aktiven Substanzen lassen sich auf kleinstem Raum relativ große Oberflächen unterbringen. Den Angaben dieser Auslegeschrift entsprechend soll dabei der offene Flächenbereich über 60 % des gesamten Flächenbereichs betragen, so daß noch mit einem halbwegs annehmbaren Strömungswiderstand zu rechnen ist.

Durch die deutschen Patentschriften 29 27 246 und 29 27 253 ist ein Verfahren zur Herstellung eines Denitrierkatalysators bekannt geworden, bei dem auf einem metallischen, plattenförmigen und porösen Träger eine katalytisch aktive Metallverbindung abgeschieden ist. Wie aus den Schriften zu entnehmen ist, wird hier ein Metallnetz, bestehend aus Stahldrähten von 0,5 bzw. 0,25 mm Durchmesser und einer Maschenweite von 0,91 mm, als Tragstruktur verwendet. Diese beschichteten Katalysatorplatten werden parallel zu einander und zum Rauchgasstrom ausgerichtet angeordnet. Zur gegenseitigen Beabstandung wird gemäß dieser Druckschrift jede zweite Katalysatorplatte zick-zack-förmig gefaltet. Es ist eine Eigenschaft solcher Plattenkatalysatoren, daß mit ihnen die freie Stirnfläche stark vergrößert und somit zugleich auch der Strömungswiderstand gegenüber anderen geometrischen Anordnungen, wie z. B. Schüttungen, deutlich vermindert werden kann. Wegen der nicht zu vernachlässigenden freien Querschnitte zwischen den Katalysatorplatten ist bei solchen Anordnungen jedoch ein gewisser Schlupf der Reaktanden, d. h. hier sowohl der zu reduzierenden Stickoxide als auch des Reduktionsmittels - im allgemeinen Ammoniak -, nicht zu vermeiden. Man kann diesen Schlupf verringern, indem man die Baulänge solcher Katalysatoranordnungen in Strömungsrichtung durch Vergrößerung der Platten oder durch Übereinanderstapeln mehrerer solcher Katalysatoranordnungen vergrößert. Damit aber vergrößert man zugleich wieder den Strömungswiderstand der gesamten Anordnung und auch den Raumbedarf.

Durch die DE-GM 89 14 485 ist bereits ein Platten-Katalysator bekannt, bei dem jeweils zwei benachbarte Platten schräg zueinander angeordnet sind. Durch diese Anordnung entstehen Strömungskanäle unterschiedlicher Breite. Durch diese Anordnung wird der Schlupf der Reaktanden etwas verringert und der Strömungswiderstand des Plattenkatalysators zugleich erhöht.

Der Erfindung liegt die Aufgabe zugrunde, bei einer Katalysatoranordnung für weitgehend staubfreie Gase die Abmessungen der Katalysatoranordnung soweit wie möglich zu verringern, ohne den Strömungswiderstand oder den Schlupf der Reaktionspartner, insbesondere der Stickoxide und des Reduktionsmittels, zu erhöhen. Darüber hinaus soll auch ein Verfahren zur Herstellung einer solchen Katalysatoranordnung angegeben werden.

Diese Aufgabe wird durch die Merkmale des Anspruchs 1 und des Anspruchs 9 gelöst. Weitere vorteilhafte Ausgestaltungen der Erfindung sind den Ansprüchen 2 bis 8 und 10 bis 15 zu entnehmen.

Bezüglich der Katalysatoranordnung wird die Aufgabe erfindungsgemäß dadurch gelöst, daß wenigstens annähernd parallel zueinander und zum Gasstrom ausgerichtete Katalysatorplatten verwendet sind, wobei
a) eine jede Katalysatorplatte eine beidseitig mit einer katalytisch aktiven Masse beschichtete metallische Tragstruktur enthält,
b) die metallische Tragstruktur eine Stärke kleiner als 0,7 mm hat,
c) die Schichtdicke der aufgetragenen katalytischen Masse kleiner als 0,8 mm ist,
d) der gegenseitige Plattenabstand kleiner als 3 mm ist, und
e) die Platten parallel zur Strömungsrichtung ausgerichtete Wellen bzw. Sicken besitzen.
Auf diese Weise wird eine Konstruktion erreicht, die trotz großer Oberfläche je Volumeneinheit und somit kleinsten Abmessungen einen relativ geringen Strömungswiderstand aufweist. Wegen der sehr kleinen Weglängen zwischen den unmittelbar benachbarten Plattenoberflächen, die kleiner sind als die Durchmesser der turbulenten Gaswirbel, wird ein im Verhältnis zum Strömungswiderstand nur sehr geringer Schlupf an Reaktanden erreicht. Dies gilt je nach katalytischer Beschichtung sowohl für Katalysatoren für die Reduktion der Stickoxide in Abgasen in Gegenwart von Ammoniak als auch für Katalysatoren für die Oxidation von unverbrannten Stoffen in Gegenwart eines Oxidationsmittels, wie etwa von Lösungsmitteldämpfen in der Abluft von Industriebetrieben.

Bezüglich des Verfahrens wird die Aufgabe erfindungsgemäß dadurch gelöst, daß durch nasses Vermahlen der katalytisch aktiven Komponenten ein dünner Schlicker erzeugt und auf der metallischen Tragstruktur aufgetragen wird, und die so beschichtete metallische Tragstruktur anschließend mit Sicken versehen und bei Temperaturen über 450 °C calziniert wird. Die Erzeugung eines nassen Schlickers auf den katalytisch aktiven Komponenten erleichtert es, eine hinreichend dünne Schicht der katalytisch aktiven Substanz auf der metallischen Tragstruktur aufzutragen.

In vorteilhafter Ausgestaltung der Erfindung kann als metallische Tragstruktur ein dünnes Drahtnetz verwendet sein. Dünne Drahtnetze haben gegenüber Lochplatten den Vorteil, daß die Beschichtungen auf beiden Seiten der metallischen Tragstruktur untereinander besser zusammenhängen und die Verschleißfestigkeit und damit verbunden die Standzeit wirkungsvoll vergrößert wird.

Die Haftfestigkeit der katalytisch aktiven Beschichtung auf der metallischen Tragstruktur und damit auch die Standzeit läßt sich weiter verbessern, wenn die metallische Tragstruktur in Ausgestaltung der Erfindung durch ein abrasives Verfahren, wie z. B. Sandstrahlen oder Korundstrahlen oder durch Funkenerosion, vor der Beschichtung aufgerauht worden ist.

In zweckmäßiger Weiterbildung der Erfindung kann der Porendurchmesser der katalytisch aktiven Beschichtung auf einen Wert um 100 Angströmeinheiten eingestellt werden. Hierdurch wird die Aktivität je Oberflächeneinheit optimiert.

In weiterer vorteilhafter Ausgestaltung der Erfindung kann die metallische Tragstruktur dünner als 0,6 mm sein. Dies erfordert Drahtgeflechte mit Drahtstärken unter 0,3 mm. Diese Verringerung der Dicke der metallischen Tragstruktur vergrößert ebenso wie die Verringerung der Stärke der katalytischen Beschichtung bei gegebenem Plattenabstand die offene Frontalfläche und damit den Strömungswiderstand. Die damit jedoch auch verbundene Verringerung der Standfestigkeit der Tragstruktur kann durch Aufwickeln oder Einspannen der calzinierten, beschichteten Tragstruktur in einem Modulgehäuse aufgefangen werden.

Ein besonders dünner und zugleich die Oberfläche vergrößernder Auftrag des Schlickers läßt sich erreichen, wenn derselbe durch Aufsprühen mit einer Spritzpistole auf die Tragstruktur aufgebracht ist. Mit Spritzpistolen, wie sie beim Spritzen von Farben und Lacken verwendet werden, lassen sich sehr dünne Oberflächen auftragen. Darüber hinaus hat diese Art des Auftrags den Vorteil, daß in Verbindung mit einem Drahtnetz Querdurchströmungen durch die Katalysatorplatten möglich werden, was sich wiederum vorteilhaft auf die Durchmischung der Gaskomponenten und die Verringerung des Schlupfes auswirkt.

Weitere Ausgestaltungen der Erfindung sind den übrigen Unteransprüchen zu entnehmen.

Ausführungsbeispiele der Erfindung werden anhand der Figuren 1 bis 4 erläutert. Es zeigen:
- FIG 1: einen vergrößerten Ausschnitt einer erfindungsgemäßen Katalysatorplatte,
- FIG 2: eine Aufsicht auf ein erfindungsgemäßes Katalysatormodul mit gesickten Katalysatorplatten,
- FIG 3: eine schaubildliche Ansicht eines erfindungsgemäßen Katalysatorwickels mit gewellter metallischer Tragstruktur und
- FIG: 4 eine Seitenansicht des Katalysatorwickels der Figur 3.

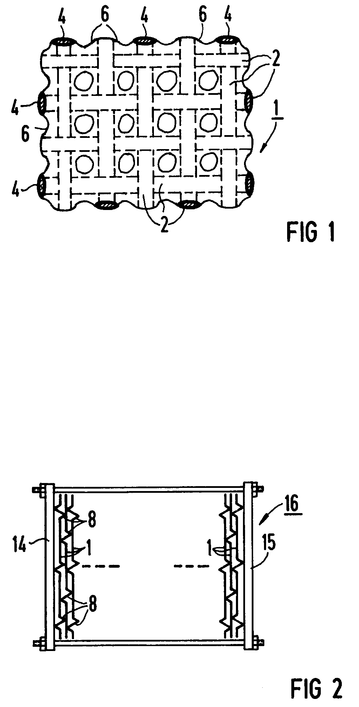

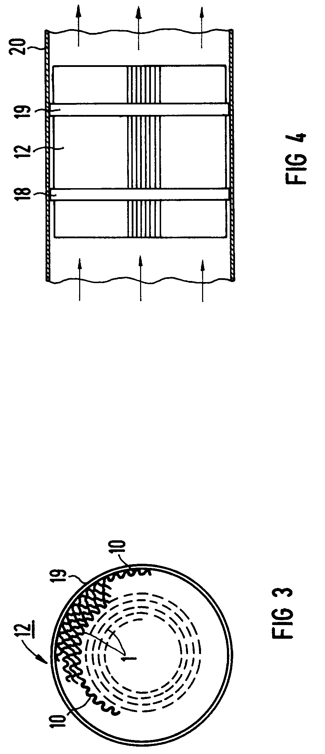

In der Figur 1 erkennt man in stark vergrößerter Darstellung den Aufbau einer Katalysatorplatte 1, bestehend aus einem dünnen Drahtnetz 2 von im Ausführungsbeispiel 0,3 mm starken Drähten 4 und einer auf dem Drahtnetz aufgebrachten katalytisch aktiven Beschichtung 6. Diese katalytisch aktive Beschichtung 6 ist zusammen mit dem Drahtnetz 2, nach vorheriger Verformung desselben zu Sicken 8 oder Wellen 10 entsprechend den Figuren 2 oder 3, zu einem starren Gebilde gesintert worden.

Zur Herstellung solcher Katalysatorplatten 1 wird ein Drahtnetz 2 oder Drahtgeflecht, bestehend aus 0,3 mm starken Drähten 4 aus nicht rostendem Stahl, eingesetzt. Dieses Drahtnetz wird vor der weiteren Verarbeitung durch Strahlen mit Korundkristallen oberflächlich aufgerauht. Mit einem parallelen Arbeitsschritt wird aus den Bestandteilen der katalytisch aktiven Masse, d. h. im Falle eines DeNOx-Katalysators aus Titandioxid, Molybdäntrioxid und Vanadiumpentoxid, unter Zugabe von destilliertem Wasser ein Schlicker gebildet. Dabei kommt Titanoxid zum Einsatz, welches zu 60 % in der Anastasmodifikation vorliegt und eine mittlere Teilchengröße von 10 bis 100 nm hat. Dieser Schlicker wird mit einer Spritzpistole mit Preßluft beidseitig auf das Drahtnetz 2 aufgetragen, so daß eine mittlere Schichtdicke von 0,4 mm katalytischer Masse auf das Drahtgeflecht aufgetragen wird. Dabei errechnet sich die Schichtdicke als die mittlere Dicke, die auf dem jeweiligen Drahtabschnitt aufliegt. Das heißt, es entsteht eine Platte mit einer Stärke von 2 x 0,4 + 0,3 = 1,1 mm. Das so beschichtete Drahtnetz 2 wird bei der Verwendung als Katalysatorplatte 1 durch einen Stanzvorgang mit parallel zueinander ausgerichteten Sicken 8 versehen und auf das Plattenmaß geschnitten. Bei der Verwendung als Katalysatorwickel 12 wird das so beschichtete Drahtnetzband mit parallel zueinander und quer zur Längsrichtung des Bandes ausgerichteten Wellen 10 versehen. Das beschichtete und gewellte Drahtnetzband oder die zurechtgeschittenen beschichteten Katalysatorplatten werden sodann bei Temperaturen um 450 °C gesintert. Anschließend können die gesinterten Katalysatorplatten 1 aufeinandergeschichtet zwischen die Spannplatten 14, 15 eines Katalysatormodulrahmens 16 eingespannt werden. Analog wird das gewellte, beschichtete und gesinterte Drahtgeflechtband zu einem Wickel 12 des gewünschten Durchmessers aufgewickelt. Es wird anschließend durch Spannbänder 18, 19 auf den gewünschten Durchmesser eingestellt.

Die Höhen der Sicken 8 bzw. der Wellen 10 bestimmen letztendlich den Abstand der katalytisch aktiven Oberflächen voneinander. Sie werden daher im Ausführungsbeispiel so eingestellt, daß ein mittlerer gegenseitiger Abstand der katalytischen Oberflächen im Ausführungsbeispiel von 0,9 mm erreicht wird, was bei einer Plattenstärke von 1,1 mm einem Plattenabstand von 2,0 mm entspricht.

Es wäre auch denkbar, die Beschichtung des Drahtnetzes 2 durch Eintauchen in den Schlicker aufzutragen. Dieses Verfahren erscheint einfacher, hat jedoch den Nachteil, daß es sehr empfindlich auf den Feuchtigkeitsgehalt des Schlickers anspricht. Infolge der sehr geringen Stärke des katalytischen Auftrags ist das Zumischen von Fasermaterial zur Haftverbesserung überflüssig. Dagegen erweist sich eine Erhöhung der Rauhigkeit des Drahtnetzes 2 als, wenn auch geringfügig, haftverbessernd aus. Positiv auf die Haftverbesserung wirkt sich auch die Zugabe von Silikagel und/oder anderen Zuschlägen bekannter anorganischer Binder aus.

Die sehr geringe Stärke des Drahtnetzes 2 und der Beschichtung desselben sowie der dadurch möglich gewordene sehr geringe Abstand der einzelnen Katalysatorplatten 1 bewirken eine deutliche Vergrößerung der Oberfläche je Volumeneinheit. Diese Oberflächenvergrößerung wird auch noch durch die eingestellte Porenweite der katalytischen Beschichtung von ca. 100 Angströmeinheiten infolge der Korngröße der verwendeten Ausgangsstoffe unterstützt. Hierdurch wird die katalytische Aktivität bei gegebenem Raumbedarf maximiert. Weil so auch die freie Weglänge zwischen benachbarten Oberflächen deutlich kleiner ist als die Durchmesser der Gaswirbel, die sich auch bei langsamer Durchströmung ergeben, läßt sich bei Plattenabständen in der Größenordnung von etwa 1 mm ein verhältnismäßig kleiner Schlupf der Reaktanden erreichen. Die andererseits durch die geringe Stärke der Katalysatorplatten 1, insbesondere durch die geringe Stärke der Tragstruktur, hier des Drahtnetzes 2, bedingte ungenügende Standfestigkeit der Platten, kann durch Einspannen in einen Modulrahmen 16 zwischen zwei Spannplatten 14, 15, wie in der Figur 2 gezeigt, wirkungsvoll kompensiert werden. Darüber hinaus haben die Spannplatten den Vorteil, daß der Plattenabstand leicht justierbar ist. Eine ähnliche Funktion haben bei der Erstellung eines Katalysatorwickels 12 die Spannbänder 18, 19, durch die der Durchmesser des Wickels und damit bei gegebener Länge des aufgewickelten Drahtnetzes 2 auch der Abstand benachbarter Oberflächen auf den Innendurchmesser des Gehäuses bzw. Rohres 20 eingestellt werden kann.

## Patentansprüche

1. Katalysatoranordnung für weitgehend staubfreie Gase, insbesondere zur Minderung der Stickoxide in Verbrennungsabgasen in Gegenwart eines Reduktionsmittels, **dadurch gekennzeichnet,** daß wenigstens annähernd parallel zueinander und zum Gasstrom ausgerichtete Katalysatorplatten (1) verwendet sind, wobei
a) eine jede Katalysatorplatte (1) eine beidseitig mit einer katalytisch aktiven Masse beschichtete metallische Tragstruktur (2) enthält,
b) die metallische Tragstruktur (2) eine Stärke kleiner als 0,7 mm hat,
c) die Schichtdicke der aufgetragenen katalytischen Masse (6) kleiner als 0,8 mm ist,
d) der gegenseitige Plattenabstand kleiner als 3 mm ist und
e) die Platten parallel zur Strömungsrichtung ausgerichtete Wellen (10) bzw. Sicken (8) besitzen.

2. Katalysatoranordnung nach Anspruch 1, **dadurch gekennzeichnet,** daß als metallische Tragstruktur ein dünnes Drahtnetz (2) verwendet ist.

3. Katalysatoranordnung nach Anspruch 1 oder 2, **dadurch gekennzeichnet,** daß die metallische Tragstruktur (2) durch ein abrasives Verfahren, wie zum Beispiel Sandstrahlen, Korundstrahlen oder Funkenerosion, aufgerauht ist.

4. Katalysatoranordnung nach einem der Ansprüche 1 bis 3, **dadurch gekennzeichnet,** daß der Porendurchmesser der katalytisch aktiven Beschichtung (6) auf einen Wert um ca. 100 Angströmeinheiten (= 10 nm) eingestellt wird.

5. Katalysatoranordnung nach einem der Ansprüche 1 bis 4, **dadurch gekennzeichnet,** daß die katalytisch aktive Beschichtung (6) dünner als 0,4 mm aufträgt.

6. Katalysatoranordnung nach einem der Ansprüche 1 bis 5, **dadurch gekennzeichnet,** daß die metallische Tragstruktur (2) dünner als 0,6 mm ist.

7. Katalysatoranordnung nach einem der Ansprüche 1 bis 6, **dadurch gekennzeichnet,** daß der Plattenabstand kleiner als 2,5 mm ist.

8. Katalysatoranordnung nach einem der Ansprüche 1 bis 6, **dadurch gekennzeichnet,** daß der Plattenabstand kleiner als 2,0 mm ist.

9. Verfahren zur Herstellung einer Katalysatoranordnung vorzugsweise nach einem der Ansprüche 1 bis 8, **dadurch gekennzeichnet,** daß durch nasses Vermahlen der katalytisch aktiven Komponenten ein dünner Schlicker erzeugt wird, der Schlicker sodann auf der metallischen Tragstruktur (2) aufgetragen und die beschichtete metallische Tragstruktur sodann mit Sicken (8) bzw. Wellen (10) versehen wird und dann bei Temperaturen über 350 °C calziniert wird.

10. Verfahren nach Anspruch 9, **dadurch gekennzeichnet,** daß der Auftrag des Schlickers durch Aufsprühen mit einer Spritzpistole erfolgt.

11. Verfahren nach Anspruch 9, **dadurch gekennzeichnet,** daß der Auftrag des Schlickers durch Eintauchen der metallischen Tragstruktur (2) in denselben erfolgt.

12. Verfahren nach Anspruch 9, **dadurch gekennzeichnet,** daß der Auftrag des Schlickers durch Aufwalzen desselben auf die metallische Tragstruktur (2) erfolgt.

13. Verfahren nach einem der Ansprüche 9 bis 12, **dadurch gekennzeichnet,** daß die metallische Tragstruktur (2) vor dem Calzinieren auf Plattenmaß geschnitten wird.

14. Verfahren nach einem der Ansprüche 9 bis 13, **dadurch gekennzeichnet,** daß die auf Maß geschnittenen, calzinierten Platten (1) parallel zueinander in einem auf der Stirnseite der Platten offenen Gehäuse bzw. Modul (16) eingesetzt und aufeinandergepreßt gehalten werden.

15. Verfahren nach einem der Ansprüche 9 bis 12, **dadurch gekennzeichnet,** daß die metallische Tragstruktur (2) zu einem zylindrischen Körper (12) aufgewickelt wird.
